# EUROPÄISCHE PATENTSCHRIFT

(11) **EP 1 422 161 B1**
(45) Veröffentlichungstag und Bekanntmachung des Hinweises auf die Patenterteilung: **14.11.2007**
(21) Anmeldenummer: 03020312.9
(22) Anmeldetag: 09.09.2003
(51) Int. Cl.: B65D 77/06

(54) **Transport- und Lagerbehälter für Flüssigkeiten**
Transport and storage container for liquids
Récipient de transport et de stockage pour liquides

(30) Priorität: 17.09.2002 DE 10242954
(43) Veröffentlichungstag der Anmeldung: 26.05.2004
(73) Patentinhaber: PROTECHNA S.A., 1701 Fribourg (CH)
(72) Erfinder: Schütz, Udo, 56242 Selters / Westerwald (DE)
(74) Vertreter: Pürckhauer, Rolf

(56) Entgegenhaltungen:
- EP-A- 1 354 816
- DE-A1- 10 124 681
- DE-U1- 9 405 092
- DE-U1- 20 206 436
- GB-A- 2 219 270

## Beschreibung

Die Erfindung betrifft einen Transport- und Lagerbehälter für Flüssigkeiten, mit einem palettenartigen Untergestell aus Metall oder einem elektrisch leitenden Kunststoff, einem auf dem Untergestell stehenden, austauschbaren, ein- oder mehrschichtigen Innenbehälter aus Kunststoff mit einer dauerantistatischen Außenschicht, der als quaderförmiger oder kubischer Behälter mit vier Seitenwänden, einem unteren und einem oberen Boden, einem oberen verschließbaren Einfüllstutzen und einer Entnahmearmatur aus einem elektrisch leitenden Kunststoffmaterial ausgebildet ist, sowie mit einem den Innenbehälter umgebenden Außenmantel, der aus Gitterstäben aus Metall oder Blech besteht. Ein Transport- und Lagerbehälter für Flüssigkeiten dieser Art ist aus der DE 202 06 436 U bekannt

Der Kunststoff-Innenbehälter von aus der DE 196 05 890 A1 bekannten Transport- und Lagerbehältern dieser Art für Flüssigkeiten weist eine dauerantistatische Außenschicht auf, die zusammen mit dem metallischen Untergestell als elektrische Erdung dient, um eine elektrostatische Aufladung der Oberfläche des Kunststoffinnenbehälters durch Reiben des Innenbehälters an dem metallischen Außenmantel beim Transport zu verhindern. Auf diese Weise sollen elektrische Entladungen mit einer Funkenbildung zwischen dem Kunststoff-Innenbehälter und dem Metallgittermantel, die zu einer Entzündung von feuergefährlichen Füllgütern des Transport- und Lagerbehälters sowie von explosionsfähigen Gemischen von Gasen und Dämpfen in geschlossenen Räumen führen können, vermieden werden. Durch diese äußere Erdung mittels einer dauerantistatischen Außenschicht des Kunststoffbehälters können nicht die elektrischen Ladungen abgeleitet werden, die beim Befüllen und Entleeren des Innenbehälters und beim Rühren von Flüssigkeiten in dem Innenbehälter z.B. zu Mischzwecken durch Flüssigkeitsreibung an der Innenfläche des Behälters und in der Flüssigkeit entstehen.

Die DE 197 31 518 A1 beschreibt einen Transport- und Lagerbehälter für Flüssigkeiten, der durch eine auf den Kunststoff-Innenbehälter aufgesetzte Gitterhaube aus dünnem Metalldraht oder ein auf den Innenbehälter aufgebrachtes elektrisch leitfähiges Netz oder Gewebe geerdet ist. Durch diese äußere Erdung werden wie bei dem aus der DE 196 05 890 A1 bekannten Transport- und Lagerbehälter nur die auf der Behälteroberfläche auftretenden elektrischen Ladungen abgeleitet. Ferner ist die elektrische Erdung des Flüssigkeitsbehälter durch eine Gitterhaube, ein Netz oder ein Gewebe technisch aufwendig und führt zu einer entsprechenden Erhöhung der Herstellungskosten.

Bei einem in der DE 198 15 082 A1 beschriebenen Transport- und Lagerbehälter für Flüssigkeiten ist in der am Auslaufstutzen des Innenbehälters angebrachten Entnahmearmatur ein Erdungsteil angeordnet, das als ein gekrümmtes Blech oder Plättchen aus Metall ausgebildet ist, das sich über einen Teilbereich der Innenbohrung der Entnahmearmatur erstreckt und über eine Befestigungsschraube und ein Erdungskabel an das Untergestell des Behälters angeschlossen ist. Durch diese innere Erdung werden nur die in der Flüssigkeit aufgrund von Flüssigkeitsreibung sich bildenden elektrischen Ladungen abgeleitet. Ferner besteht bei diesem Flüssigkeitsbehälter die Gefahr, daß beim Transport und der Lagerung von aggressiven Flüssigkeiten das Erdungsteil von der Flüssigkeit derart beschädigt wird, daß die elektrische Erdung nicht mehr funktionstüchtig ist.

Der Erfindung liegt die Aufgabe zugrunde, den gattungsgemäßen Transport- und Lagerbehälter für Flüssigkeiten im Hinblick auf eine sichere und umfassende Erdung des Kunststoff-Innenbehälters und eine preisgünstige Herstellung weiterzuentwickeln.

Diese Aufgabe wird erfindungsgemäß gelöst durch Transport- und Lagerbehälter für Flüssigkeiten gemäß den Patentansprüchen 1 und 2.

Die Unteransprüche beinhalten vorteilhafte und zweckmäßige Weiterbildungen der Erfindung.

Die Erfindung beruht darauf, bei einem Transport- und Lagerbehälter für Flüssigkeiten, der mit einem mehrschichtigen Kunststoff-Innenbehälter mit einer dauerantistatischen Außenschicht, einem als Gittermantel aus Metall oder als Blechmantel ausgebildeten Außenmantel sowie einem palettenartigen Untergestell aus Metall oder einem elektrisch leitenden Kunststoff ausgestattet ist, den Auslaufstutzen des Innenbehälters oder die Entnahmearmatur aus einem elektrisch leitenden Kunststoffmaterial herzustellen, den Auslaufstutzen des Innenbehälters oder den Einlaufstutzen der Entnahmearmatur mit der dauerantistatischen Außenschicht des Innenbehälters zu verschweißen und gegebenenfalls in die Wände sowie den unteren und den oberen Boden des Innenbehälters Abschnitte aus einem elektrisch leitenden Kunststoff einzubetten, die elektrische Verbindungen zwischen der Innen- und der Oberfläche des Innenbehälters bilden, so daß elektrische Ladungen, die beim Transport durch eine gegenseitige Reibung von Innenbehälter und Außenmantel an der Behälteroberfläche auftreten und die sich beim Befüllen und Entleeren des Transport- und Lagerbehälters und beim Rühren von Flüssigkeiten in dem Behälter zum Beispiel zu Mischzwecken durch Flüssigkeitsreibung in der Flüssigkeit und an der Behälterinnenfläche bilden, über die elektrisch leitenden Wand- und Bodenabschnitte, die dauerantistatische Außenschicht und den elektrisch leitenden Auslaufstutzen des Innenbehälters oder die leitende Entnahmearmatur, den Außenmantel und das Untergestell in den Boden abgeleitet werden. Durch die elektrisch leitende Ausbildung des Auslaufstutzens des Innenbehälters oder der Entnahmearmatur, in deren Durchflußöffnungen bei der Entnahme von Flüssigkeit aus dem Behälter aufgrund der Auslaufgeschwindigkeit der Flüssigkeit die größte Flüssigkeitsreibung im Behälter auftritt, wird eine elektrostatische Aufladung des Behälters auf eine einfache und wirkungsvolle Weise vermieden. Die elektrische Erdung der Behälteroberfläche des Kunststoff-Innenbehälters und der in diesem zu transportieren bzw. zu lagernden Flüssigkeiten ermöglicht die Verwendung des Transport- und Lagerbehälters als Gefahrgutbehälter für feuergefährliche Flüssigkeiten und Emulsionen wie Lösungsmittel, Farben und Lacke mit einem Flammpunkt < 35°C sowie den Einsatz des Behälters in Betriebsräumen, in denen sich eine explosive Atmosphäre durch Gase, Dämpfe oder Nebel bilden kann.

Der erfindungsgemäße Transport- und Lagerbehälter für Flüssigkeiten ist nachstehend anhand von Zeichnungsfiguren erläutert, die folgendes darstellen:
- Fig. 1: eine perspektivische Darstellung eines Transport- und Lagerbehälters und jeweils in vergrößerter Darstellung

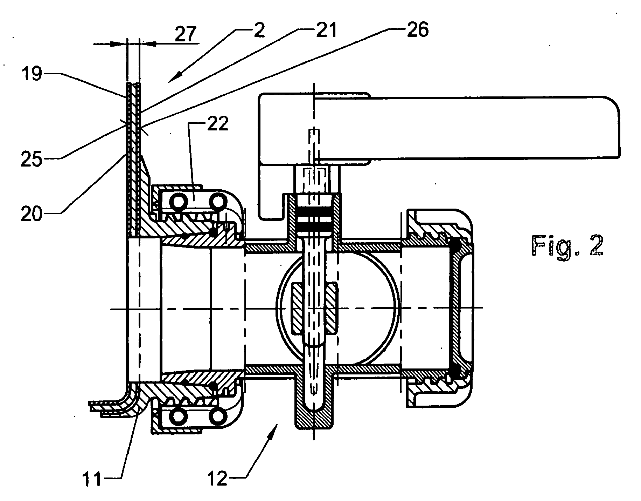

- Fig. 2: einen Vertikalschnitt des Auslaufbereichs des Behälters mit einer an den Auslaufstutzen des Innenbehälters angeschraubten Entnahmearmatur sowie
- Fig. 3: einen Vertikalschnitt entsprechend Fig. 2 mit einer an den Innenbehälter angeschweißten Entnahmearmatur.

Der als Ein- und Mehrwegbehälter einsetzbare Transport- und Lagerbehälter 1 für Flüssigkeiten weist als Hauptbauteile einen austauschbaren, quaderförmigen Innenbehälter 2 aus Polyethylen mit einer Stirnwand 3, einer Rückwand 4 und zwei Seitenwänden 5, 6, einem unteren als Ablaufboden ausgebildeten Boden 7, einem oberen Boden 8 mit einem durch einen Schraubdeckel 10 verschließbaren Einfüllstutzen 9 sowie einem Auslaufstutzen 11 im unteren Abschnitt der Stirnwand 3 mit einer Entnahmearmatur 12, einen Außenmantel 13 aus sich kreuzenden senkrechten und waagrechten Gitterstäben 14, 15 aus Metall, ein palettenartiges Untergestell 16 mit einer Bodenwanne 17 aus Blech zur Aufnahme des Kunststoff-Innenbehälters 2 sowie zwei Deckelstäbe 18 aus Metall zum Schutz des Innenbehälters 2 auf.

Stirnwand 3, Rückwand 4, Seitenwände 5, 6 sowie unterer und oberer Boden 7, 8 des aus einem Polyethylen hoher Dichte durch Extrusionsblasformen hergestellten Kunststoff-Innenbehälters 2 bestehen aus einer Innenschicht 19, einer Mittelschicht 20 sowie einer dauerantistatischen Außenschicht 21 mit einem Leitrußanteil. Die Dicke der Mittelschicht 20 beträgt 1 bis 2 Millimeter, vorzugsweise 1,5 Millimeter und die Stärke der Innen- und Außenschicht 19, 21 0,1 - 0,5 Millimeter, vorzugsweise 0,2 Millimeter.

Für die Herstellung der Mittelschicht 20 wird ein recyceltes Granulat oder Mahlgut aus reinem Polyethylen und/oder Polyethylen mit einem Leitrußanteil verwendet, und als Ausgangsmaterial für die Innen- und die Außenschicht 19, 21 dient ein neuwertiges Polyethylen-Granulat.

Der Kunststoff-Innenbehälter kann beispielsweise auch einen Sechsschichtenaufbau mit einer Innenschicht aus reinem Polyethylen hoher Dichte, einer Sperrschicht aus Polyamid oder einem Ethylen-Vinylacetat-Copolymer gegen die Permeation von Sauerstoff und Kohlenwasserstoffen, die in zwei Haftvermittlerschichten aus einem Polyethylen niedriger Dichte eingebettet ist, einer Mittelschicht aus recyceltem Granulat oder Mahlgut aus reinem Polyethylen hoher Dichte und/oder Polyethylen hoher Dichte mit einem Leitrußanteil sowie einer dauerantistatischen Außenschicht aus Polyethylen hoher Dichte mit einem Leitrußanteil aufweisen.

Der Auslaufstutzen 11 des Kunststoff-Innenbehälters 2 ist als Spritzteil aus einem elektrisch leitenden Kunststoffmaterial, vorzugsweise einem Polyethylen hoher Dichte mit einem Leitrußanteil hergestellt. Beim Extrusionsblasformen des Innenbehälters 2 wird der in die Blasform eingelegte Auslaufstutzen 11 mit der dauerantistatischen Außenschicht 21 des Innenbehälters verschweißt. Der hohe Leitrußanteil des Polyethylens ermöglicht einen spezifischen Oberflächenwiderstand ≦ 10⁵ Ohm und einen spezifischen Durchgangswiderstand ≦ 10³ Ohm der Außenschicht 21 und des Auslaufstutzens 11 des Innenbehälters 2.

Die mit einer Überwurfmutter 22 an dem Auslaufstutzen 11 des Innenbehälters 2 befestigte Entnahmearmatur 12 und der Schraubdeckel 10 zum Verschließen des Einfüllstutzens 9 des Innenbehälters 2 können aus einem elektrisch leitenden Kunststoff, vorzugsweise Polyethylen hoher Dichte mit einem Leitrußanteil hergestellt werden.

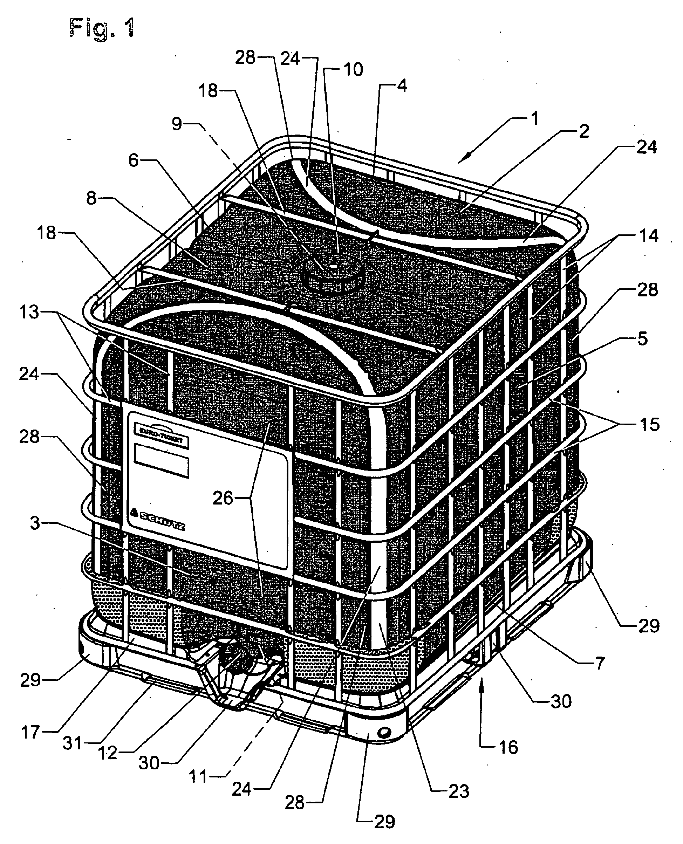

In den Körper des Innenbehälters 2 sind als Streifen 24 ausgebildete, elektrisch leitende Abschnitte 23 aus einem Polyethylen hoher Dichte mit einem Leitrußanteil integriert, die elektrische Verbindungen zwischen der Innenfläche 25 und der Oberfläche 26 des Innenbehälters 2 bilden und deren Stärke der Wandstärke 27 des Innenbehälters 2 entspricht. Die elektrisch leitenden Streifen 24, die in Fig. 1 zur Verdeutlichtung hell erscheinen, verlaufen senkrecht über die Eckbereiche 28 zwischen den seitlichen Wänden 3 - 6 und/oder die Wände und schräg über den unteren und den oberen Boden 7, 8 des Innenbehälters 2.

Die Bodenwanne 17 des Untergestells 16 steht mit einer bestimmten Bodenfreiheit auf Eck- und Mittelfüßen 29, 30 und einem Fußrahmen 31 oder Kufen, so daß die Bodenwanne 17 zum Transport des Behälters 1 von vier Seiten von den Greifarmen eines Transportgerätes, z.B. eines Gabelstaplers, unterfahren werden kann. Die Füße 29, 30 und der Fußrahmen 31 bzw. die Kufen sind aus Metall oder einem elektrisch leitenden Kunststoff, z.B. Polyethylen mit einem Leitrußanteil, hergestellt, so daß der Transport- und Lagerbehälter 1 über die elektrisch leitenden Streifen 24, die dauerantistatische Außenschicht 21 und den Auslaufstutzen 11 des Kunststoff-Innenbehälters 2, den Außenmantel 13 und das Untergestell 16 elektrisch geerdet ist und dadurch elektrische Ladungen, die an der Innenfläche des Innenbehälters und im flüssigen Füllgut sowie an der Behälteroberfläche auftreten, in den Boden abgeleitet werden können.

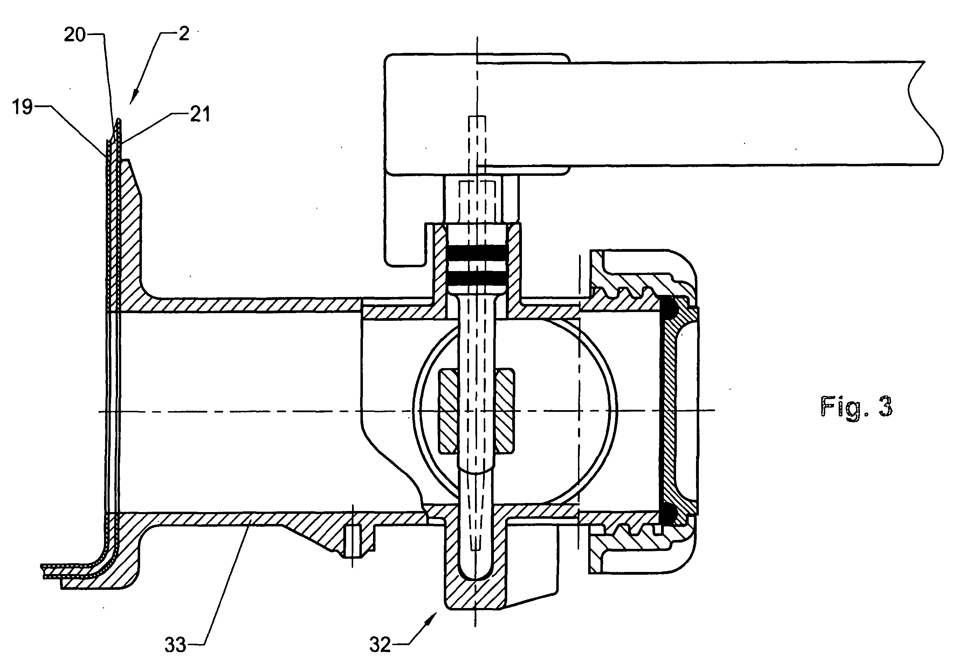

Fig. 3 zeigt eine weitere Ausführungsform des Transport- und Lagerbehälters 1 mit einer Entnahmearmatur 32 aus einem Polyethylen hoher Dichte mit einem Leitrußanteil, deren Einlaufstutzen 33 mit der dauerantistatischen Außenschicht 21 des Kunststoff-Innenbehälters 2 verschweißt ist.

## Patentansprüche

1. Transport- und Lagerbehälter für Flüssigkeiten (1), mit einem palettenartigen Untergestell (16) aus Metall oder einem elektrisch leitenden Kunststoff, einem auf dem Untergestell (16) stehenden, austauschbaren, ein- oder mehrschichtigen Innenbehälter (2) aus Kunststoff mit einer dauerantistatischen Außenschicht (21), der als quaderförmiger oder kubischer Behälter mit vier Seitenwänden (3-6), einem unteren und einem oberen Boden (7, 8), einem oberen verschließbaren Einfüllstutzen (9) und einer Entnahmearmatur (12) aus einem elektrisch leitenden Kunststoffmaterial ausgebildet ist, sowie mit einem den Innenbehälter (2) umgebenden Außenmantel (13), der aus Gitterstäben (14, 15) aus Metall oder Blech besteht, **dadurch gekennzeichnet, dass** der Kunststoff-Innenbehälter (2) einen Auslaufstutzen (11) aus einem elektrisch leitenden Kunststoffmaterial zum Anschließen der Entnahmearmatur (12) aufweist und dass der Auslaufstutzen (11) beim Blasformen des Innenbehälters (2) mit dessen dauerantistatischer Außenschicht (21) verschweißt wird.

2. Transport- und Lagerbehälter für Flüssigkeiten nach dem Oberbegriff des Anspruchs 1, **gekennzeichnet durch** eine Entnahmearmatur (32) aus einem elektrisch leitenden Kunststoffmaterial, deren Einlaufstutzen (33) mit der dauerantistatischen Außenschicht (21) des Kunststoff-Innenbehälters (2) verschweißt ist.

3. Behälter nach Anspruch 1, **dadurch gekennzeichnet, daß** der als Kunststoff-Spritzteil hergestellte Auslaufstutzen (11) des Innenbehälters (2) aus einem Polyethylen hoher Dichte mit einem Leitrußanteil besteht.

4. Behälter nach Anspruch 2, **dadurch gekennzeichnet, daß** die Entnahmearmatur (32) aus einem Polyethylen hoher Dichte mit einem Leitrußanteil besteht.

5. Behälter nach einem der Ansprüche 1 bis 4, **gekennzeichnet durch** in den Körper des mehrschichtigen Innenbehälters (2) integrierte Abschnitte (23) aus einem elektrisch leitenden Kunststoffmaterial, die als Streifen (24) ausgebildet sind und elektrische Verbindungen zwischen der Innenfläche (25) und der Oberfläche (26) des Innenbehälters (2) bilden.

## Claims

1. Transport and storage container for liquids (1), with a pallet-like supporting frame (16) made of metal or an electrically conductive plastic, a replaceable single- or multiple layered plastic inner container (2) with permanently antistatic outer layer (21), which stands on the supporting frame (16) and which is configured as a parallelepipedal or cubic container with four side walls (3-6), a lower and an upper floor (7, 8), an upper closable filler connection (9) and a removal fitting (12) made of an electrically conductive plastic material, and also with an outer shell (13) surrounding the inner container (2) and composed of grating bars (14, 15) made of metal or sheet metal, **characterised in that** the plastic inner container (2) has an outlet connection (11) made of an electrically conductive plastic material for connection of the removal fitting (12), and that the outlet connection (11) is welded to the permanently antistatic outer layer (21) of the inner container (2) during the blow moulding thereof.

2. Transport and storage container for liquids according to the preamble of claim 1, **characterised by** a removal fitting (32) made of an electrically conductive plastic material, the inlet connection (33) of which is welded to the permanently antistatic outer layer (21) of the plastic inner container (2).

3. Container according to claim 1, **characterised in that** the outlet connection (11) of the inner container (2) produced as a plastic injection moulding is made of a high density polyethylene with conductive black component.

4. Container according to claim 2, **characterised in that** the removal fitting (32) is made of a high density polyethylene with conductive black component.

5. Container according to one of claims 1 to 4, **characterised by** sections (23) made of an electrically conductive plastic material, which are integrated into the body of the multiple layered inner container (2) and which are configured as strips (24) and form electrical connections between the inside face (25) and the surface (26) of the inner container (2).

## Revendications

1. Cuve de transport et de stockage de liquides (1), comprenant un sous-bâti (16) du type palette en métal ou en une matière plastique conductrice de l'électricité, une cuve (2) intérieure en matière plastique à une couche ou à plusieurs couches, remplaçable, se tenant sur le sous-bâti (16) et ayant une couche (21) extérieure antistatique de longue durée, la cuve intérieure étant sous la forme d'une cuve parallélépipédique ou cubique ayant quatre parois (3 à 6) latérales, un plateau (7) inférieur et un plateau (8) supérieur, une tubulure (9) de remplissage supérieure pouvant être fermée et un robinet (12) de prélèvement en une matière plastique conductrice de l'électricité, ainsi qu'une enveloppe (13) extérieure entourant la cuve (2) intérieure et constituée de barres (14, 15) de treillis en métal ou en tôle, **caractérisée en ce que** la cuve (2) intérieure en matière plastique a une tubulure (11) de sortie en une matière plastique conductrice de l'électricité pour le raccordement du robinet (12) de prélèvement et **en ce que** la tubulure (11) de sortie est soudée lors du moulage par soufflage de la cuve (2) intérieure à sa couche (21) extérieure antistatique de longue durée.

2. Cuve de transport et de stockage de liquide suivant le préambule de la revendication 1, **caractérisée par** un robinet (32) de prélèvement en une matière plastique conductrice de l'électricité, dont la tubulure (33) d'entrée est soudée à la couche (21) extérieure antistatique de longue durée de la cuve (2) intérieure en matière plastique.

3. Cuve suivant la revendication 1, **caractérisée en ce que** la tubulure (11) de sortie, fabriquée sous la forme d'une pièce moulée par injection en matière plastique, de la cuve (2) intérieure est en polyéthylène de grande densité en ayant une proportion de suie conductrice.

4. Cuve suivant la revendication 2, **caractérisée en ce que** le robinet (32) de prélèvement est en polyéthylène de grande densité ayant une proportion de suie conductrice.

5. Cuve suivant l'une des revendications 1 à 4, **caractérisée par** des parties (23) en matière plastique conductrice de l'électricité, intégrées dans le corps de la cuve (2) intérieure à plusieurs couches, sous la forme de bandes (24) et formant des liaisons électriques entre la surface (25) intérieure et la surface (26) supérieure de la cuve (2) intérieure.
